# EUROPEAN PATENT APPLICATION

(11) **EP 2 020 697 A1**
(43) Date of publication of application: **04.02.2009**
(21) Application number: 08160136.1
(22) Date of filing: 10.07.2008
(51) Int. Cl.: H01Q 1/32, G07C 9/00

(54) **Transmitting device**

(30) Priority: 12.07.2007 JP 2007182906
(71) Applicant: Omron Corporation, Kyoto-shi, Kyoto 600-8530 (JP)
(72) Inventor: Suzuki, Takayuki, Kyoto Kyoto 600-8530 (JP); Kamei, Noriaki, Kyoto Kyoto 600-8530 (JP)
(74) Representative: Brykman, Georges

(57) **Abstract**

The number of driving circuits in signal transmission using plural antennas can be reduced. When a first antenna is driven, a CPU makes an LF driving circuit to output driving current, and sets a first switch to ON while setting a second switch and a third switch to OFF. By setting the first switch to ON, a connector terminal and GND are connected. Therefore, a closed circuit containing the LF driving circuit and the first antenna is constructed, and the first antenna is driven, whereby the signal of LF waves is output. The second switch and the third switch are set to OFF, so that a closed circuit containing the LF driving circuit and a second antenna is not constructed, and also a closed circuit containing a third antenna is not constructed. The second antenna and the third antenna are not driven.

## Description

### BACKGROUND OF THE INVENTION

### 1. Field of the Invention

The present invention relates to a transmitting device, and particularly to a transmitting device in which the number of driving circuits can be reduced to a smaller number in signal transmission using plural antennas.

### 2. Description of Related Art

A so-called passive entry system (PES) in which locking and unlocking of doors are automatically performed in a handsfree style, etc. have been recently practically used as an entry system for a vehicle, and it has been expected to be more popular in the future (for example, see JP-A-2003-269023 (Patent Document 1)). According to this system, two-way communication is carried out between an in-vehicle mount machine and a portable machine which can be carried by a user, and authenticity of the portable machine is checked and the position, etc. of the portable machine is analyzed on the basis of electromagnetic waves (signal) received from the portable machine by the in-vehicle mount machine, whereby the operation of a locking mechanism of vehicle doors (unlocking operation and locking operation), etc. are automatically implemented under the control of the in-vehicle mount machine.

IN the passive entry system, antennas connected to the in-vehicle mount machine are disposed at the door knobs, the trunk, the room, etc. of a vehicle, and each of the antenna transmits a signal of LF waves (for example, 100 to 200 KHz) to the portable machine as occasion demands and receives a signal transmitted from the portable machine, thereby performing the communication between the in-vehicle mount machine and the portable machine.

In the passive entry system, in addition to the content of a signal transmitted/received between the in-vehicle mount machine and the portable machine, it is also important to identify an antenna through which the signal is received/transmitted. For example, in a case where the communication is carried out between a portable machine carried by a user located at the outside of a vehicle and an in-vehicle mount machine through an antenna disposed at a door knob, if a signal is erroneously transmitted from an indoor antenna and a portable machine of a user located in the vehicle room responds to the signal concerned, there would be a risk that the control of the in-vehicle mount machine cannot be normally performed.

Therefore, in order to avoid malfunction caused by simultaneous actuation of plural antennas, the conventional passive entry system has taken a countermeasure of allotting a driving circuit every antenna or the like.

However, when a driving circuit is individually provided every antenna, it causes cost-up and increase of power consumption.

### SUMMARY OF THE INVENTION

The present invention has been implemented in view of such a situation, and has an object to further reduce the number of driving circuits in signal transmission using plural antennas.

A first transmitting device according to the present invention transmits a signal from a desired antenna out of plural antennas, and comprises antenna driving means for supplying driving current to a desired antenna, plural switches connecting the antenna driving means to each of the plural antennas, and control means for controlling the antenna driving means and outputting a control signal for controlling whether each of the switches is opened or closed, wherein the control means specifies an antenna to which the signal should be transmitted, and outputs a control signal for closing the specified switch out of the switches.

In the first transmitting device of the present invention, the driving current is supplied to the desired antenna, the antenna driving means is connected to the plural antennas by the plural switches, and the control means controls the antenna driving means, outputs the control signal for controlling whether each of the switches is opened or closed, specifies the antenna to which the signal should be transmitted, and outputs a control signal for closing the switch corresponding to the specified antenna out of the switches.

Accordingly, the plural antennas can be independently driven by one LF driving circuit.

A second transmitting device according to the present invention transmits a signal from a desired antenna out of plural antennas, and comprises antenna driving means for supplying driving current to a desired antenna, plural first switches connecting the antenna driving means to plural antennas, plural second switches connecting the antenna driving means to filters which are provided on signal lines of the plural antennas, and control means for controlling the antenna driving means and outputting a control signal for controlling whether each of the first switches and the second switches is opened or closed, wherein the control means specifies an antenna to which the signal should be transmitted, outputs a control signal for closing the first switch corresponding to the specified antenna and outputs a control signal for closing second switches other than the second switch corresponding to the specified antenna, and each of the plural antennas is connected to the antenna driving means through a harness having a predetermined length.

In the second transmitting device of the present invention, the driving current is supplied to the desired antenna, the antenna driving means is connected to the plural antennas by the plural first switches, the antenna driving means is connected to respective filters provided on signal lines of the plural antennas by the plural second switches, the control means controls the antenna driving means, outputs the control signal for controlling whether each of the first switches and the second switches is opened or closed, specifies an antenna to which the signal should be transmitted, outputs the control signal for closing the first switch corresponding to the specified antenna out of the first switches and outputs the control signal for closing second switches other than the second switch corresponding to the specified antenna, and each of the plural antennas is connected to the antenna driving means through the harness having the predetermined length.

Accordingly, the plural antennas can be independently driven by one LF driving circuit, and also the output of noise from the harness can be prevented.

According to the present invention, the number of driving circuits can be further reduced in the signal transmission using plural antennas.

### BRIEF DESCRIPTION OF THE DRAWINGS

Fig. 1 is a block diagram showing an example of the construction of a first embodiment of PES of the present invention.
Fig. 2 is a block diagram showing an example of the detailed construction of an in-vehicle mount machine of Fig. 1.
Fig. 3 is a diagram to explain the setting of an antennal and a switch to be actuated in the construction of Fig. 2.
Fig. 4 is a diagram showing LC resonance in a harness.
Fig. 5 is a block diagram showing another example of the detailed construction of the in-vehicle mount machine of Fig. 1.
Fig. 6 is a diagram showing the setting of an antenna and a switch to be set in the construction shown in Fig. 2.
Fig. 7 is a diagram showing an example of the measurement of the intensity of a signal output from an antenna and the intensity of noise in the construction of Fig. 2.
Fig. 8 is a diagram showing a measurement example of the intensity of a signal output from an antenna and the intensity of noise in the construction of Fig. 5.
Fig. 9 is a flowchart showing antenna driving processing.

### DESCRIPTION OF THE PREFERRED EMBODIMENTS

An embodiment of the present invention will be described with reference to the drawings.

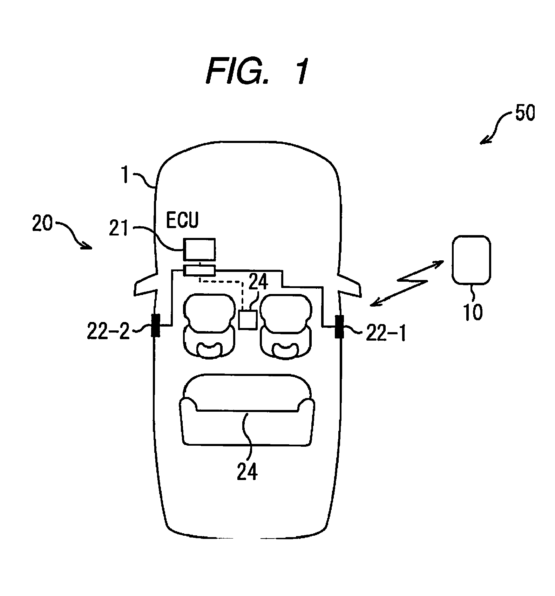

Fig. 1 is a diagram showing an example of the construction according to an embodiment of a passive entry system (PES) of the present invention. Fig. 1 shows an example in which PES 50 of the present invention is applied to a four-door type vehicle 1. PES 50 is constructed by a portable machine 10 and an in-vehicle mount machine 20 mounted in the vehicle 1.

As antennas of the in-vehicle mount machine 20 are provided door knob antennas 22-1 and 22-2 mounted in door knobs of respective doors, and an indoor antenna 24 disposed in the room of the vehicle 1. Low frequencies of LF band (for example, 100 - 200 KHz) are used for the communication between the in-vehicle mount machine 20 and the portable machine 10.

The portable machine 10 has a communication unit which serves as means for wireless communication with the in-vehicle mount machine 20 and comprises a built-in antenna and a transmitting circuit, a control circuit containing therein a microcomputer for implementing the overall control processing of the portable machine (hereinafter referred to as microcomputer), a built-in battery. A switch serving as a press-button type operation unit, etc. (not shown) are provided to the operation face of the portable machine 10.

The in-vehicle mount machine 20 comprises ECU (Electronic Control Unit) 21 for performing various kinds of arithmetic operations to execute the processing of unlocking the doors of the vehicle 1, the processing of opening the doors, the trunk, etc., the output of various kinds of control signals, the control of the driving of various kinds of antennas, etc., door knob antennas 22-1 and 22-2 and an indoor antenna 24.

In PES 50, the content of a signal transmitted/received between the in-vehicle mount machine 20 and the portable machine 10 is analyzed, and various kinds of processing are executed by the in-vehicle mount machine 20. In addition, an antenna through which a signal from the portable machine 10 is received is identified, and various kinds of processing are executed by the in-vehicle mount machine 20. Accordingly, for example, in a case where the communication is carried out between a portable machine carried by a user located at the outside of a vehicle and an in-vehicle mount machine through an antenna 22-1 disposed at a door knob, if a signal is erroneously transmitted from the indoor antenna 24 and a portable machine of a user located in the vehicle room responds to the signal concerned, there would be a risk that the control of the in-vehicle mount machine cannot be normally performed.

Therefore, a countermeasure for preventing plural antennas from being simultaneously driven is taken by constructing the in-vehicle mount machine 20 as described later.

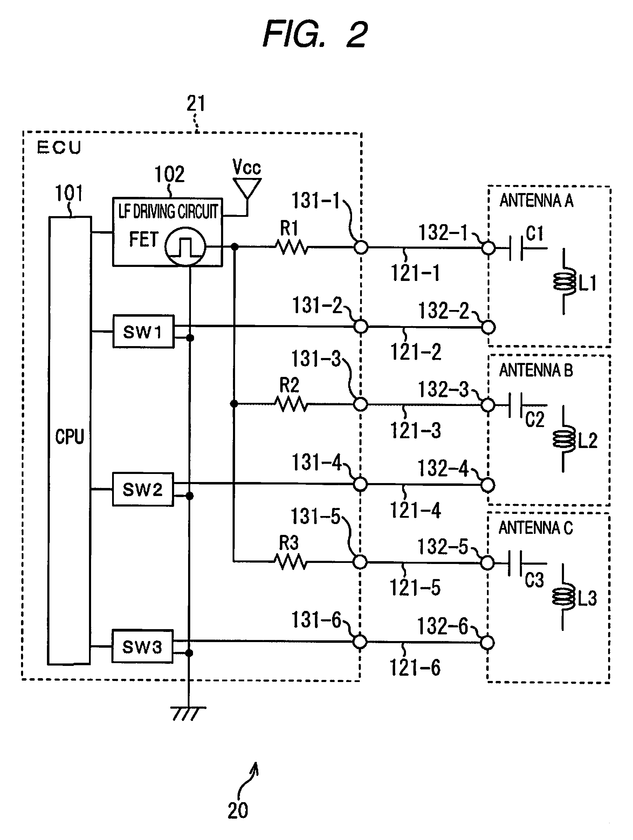

Fig. 2 is a block diagram showing an example of the detailed construction of the in-vehicle mount machine 20 of Fig. 1. In Fig. 2, CPU (Central Processing Unit) 101 of ECU 21 executes various kinds of arithmetic operations to executed the processing of unlocking the doors of the vehicle 1 and the processing of opening the doors, the trunk, etc., and properly outputs various kinds of control signals to respective parts of the vehicle 1 (not shown). CPU 101 controls the operations of an LF driving circuit 102, and SW (switches) 1 to 3.

As not shown in the figures, ECU 21 is provided with ROM (Read Only Memory) for storing programs executed by CPU 101, etc., RAM (Random Access Memory) for properly storing data required for execute various kinds of processing by CPU 101, etc., and CPU 101, ROM, RAM, etc. are mutually connected to one another through a bus or the like, for example.

The LF driving circuit 102 is configured to have FET (Field Effect Transistor) therein, and outputs driving current to antennas A to C in connection with a digital signal supplied from CPU 101, whereby LF-wave signals are transmitted from the antennas A to C.

Each of the switches SW1 to SW3 is constructed by FET, a relay or the like, and it closes the internal circuit when a predetermined control signal is supplied from CPU 101 and opens the internal circuit when another predetermined control signal is supplied from CPU 101. In this case, the closing of the internal circuit by the switches SW1 to SW3 is referred to as "(switch) ON", and the opening of the internal circuit by the switches SW1 to SW3 is referred to as "(switch) OFF".

Resistors R1 to R3 in the figures are limiting resistors provided to properly set the transmission outputs at the antennas A to C.

ECU 21 is connected to the antennas A to C through the harnesses 121-1 to 121-6.

The antennas A to C are antennas for transmitting/receiving LF waves to/from the portable machine 10, and have capacitor components C1 to C3 and reactance components L1 to L3. In Fig. 2, the antennas A to C are schematically represented, and actually both the ends of the respective antennas A to C are connected to connector terminals 132-1 to 132-6 at the left side of Fig. 2 of the antennas A to C.

For example, the antenna A corresponds to the door knob antenna 22-1 of Fig. 1, the antenna B corresponds to the door knob antenna 22-2 of Fig. 1, and the antenna C corresponds to the indoor antenna 24 of Fig. 1. That is, the antennas A to C represent plural antennas which may cause malfunction of PES 50 when they are simultaneously driven.

ECU 21 perform the following control so that the antennas A to C are not simultaneously driven.

For example, when the antenna A is driven, CPU 101 supplies a digital signal to the LF driving circuit 102 so that the driving current is output from the LF driving circuit 102 to set the switch SW1 to ON and also set the switches SW2 and SW3 to OFF.

Accordingly, the driving current output from the LF driving circuit 102 successively flows through the resistor R1, the connector terminal 131-1, the harness 121-1, the connector terminal 132-1, the antenna A, the connector terminal 132-2, the harness 121-2, the connector terminal 131-2 and the switch SW1 and then is grounded. That is, the connector terminal 131-2 and GND are connected to each other by setting the switch SW1 to ON, so that a closed circuit containing the LF driving circuit 102 and the antenna A is constructed. Accordingly, the antenna A is driven and outputs a signal of LF waves.

On the other hand, both the switch SW2 and the switch SW3 are set to OFF. Therefore, unlike the case of the antenna A, a closed circuit containing the LF driving circuit 102 and the antenna B is not constructed, and also a closed circuit containing the LF driving circuit 102 and the antenna C is not constructed. Accordingly, both the antenna B and the antenna C are not driven and no signal of LF waves is output.

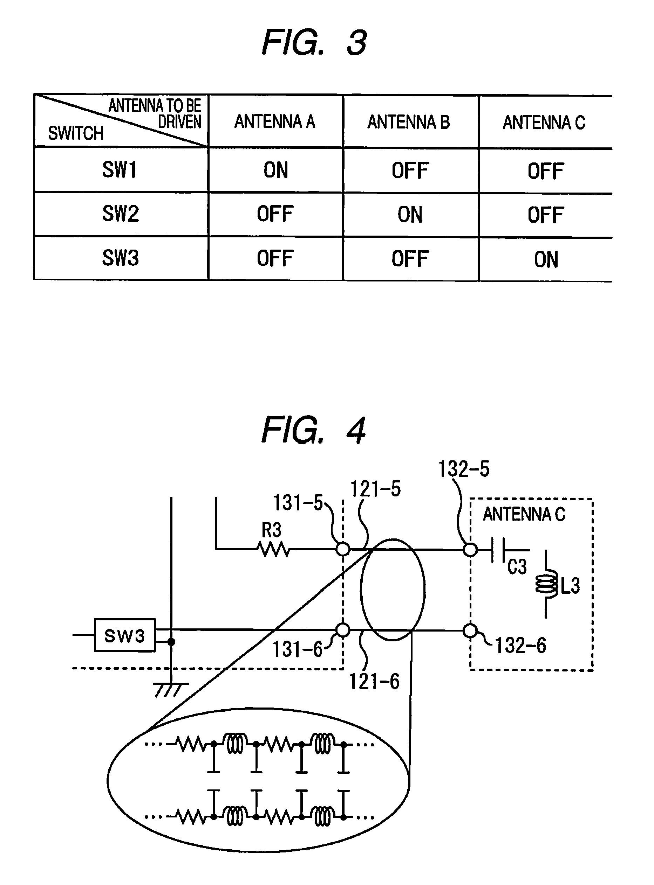

That is, the switches SW1 to SW3 may be set in accordance with the antenna to be driven as shown in Fig. 3. For example, when the antenna B is driven, CPU 101 supplies the LF driving circuit 102 with a digital signal to output driving current from the LF driving circuit 102 so that the switch SW2 is set to ON and both the switches SW1 and SW3 are set to OFF. Furthermore, when the antenna C is driven, CPU 101 supplies the LF driving circuit 102 with a digital signal to output driving current from the LF driving circuit 102 so that the switch SW3 is set to ON and both the switch SW1 and the switch SW2 are set to OFF.

As described above, the switches SW1 to SW3 are properly set to ON or OFF, whereby only a desired antenna out of the antennas A to C is driven and the other antennas are not driven.

For example, in the conventional passive entry system, a countermeasure of allotting a driving circuit every antenna is taken in order to avoid malfunction caused by simultaneous operation of plural antennas. However, when the driving circuits of the antennas are individually provided, it causes cost-up and increase of power consumption.

On the other hand, according to the present invention, only one LF driving circuit 102 is provided for the antennas A to C, and thus the manufacturing cost and power consumption of the apparatus can be reduced.

The harnesses 121-1 to 121-6 are electrically conductive wires for connecting ECU 21 and the antennas A to C, and actually they have some degree of impedance.

For example, as shown in Fig. 4, when the harness 121-5 and the harness 121-6 are schematically illustrated, they are equivalent to a so-called distribution constant circuit predetermined resistance components, predetermined reactance components and predetermined capacitor components as shown in a circuit diagram surrounded by an ellipse. When a signal having some constant frequency is supplied to such a circuit, LC resonance based on the reactance component (LC) and the capacitor component (C) of the circuit may occur.

In the example of Fig. 4, if the switch SW3 is set to OFF, the connector terminal 131-6 is not connected to GND, and thus the antenna C is not drive. However, the driving current output from the LF driving circuit 102 reaches the connector terminal 131-5. Therefore, LC resonance is generated by the frequency of the driving current reaching the connector terminal 131-5 and the distribution constant circuit comprising the harnesses 121-5 and the 121-6, so that a signal having a predetermined frequency may be output as noise from the harnesses 121-1 and 121-6.

Occurrence of the noise as described above may cause malfunction of PES 50 as in the case of the simultaneous driving of plural antennas.

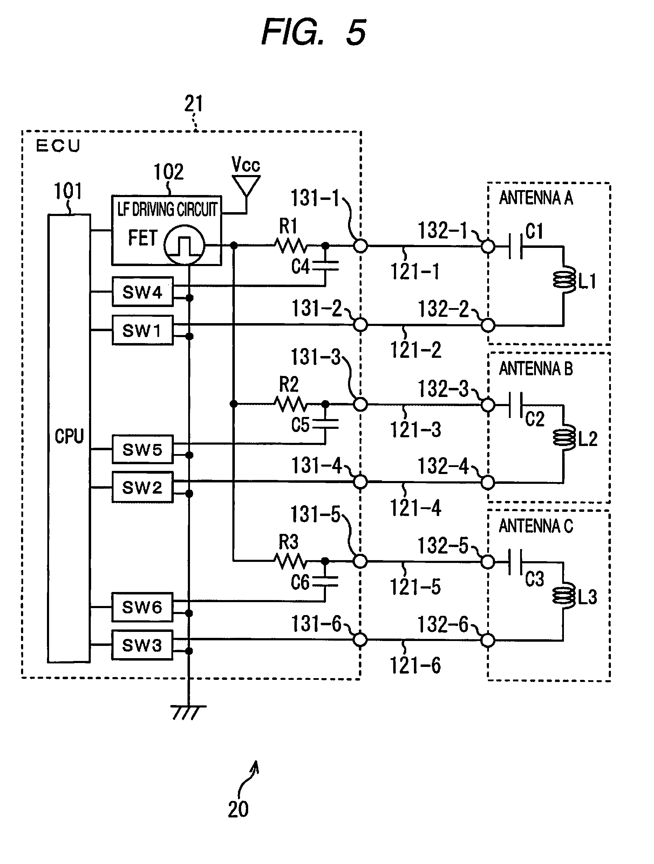

In ECU 21 constructed as shown in Fig. 2, when noise occurring from the harnesses is further removed, ECU as shown in Fig. 5 may be constructed.

Fig. 5 is a block diagram showing another example of the detailed construction of the in-vehicle mount machine 20, and same reference numerals represent the respective parts corresponding to Fig. 2. The construction, function, etc. of each of the parts corresponding to Fig. 2 are the same as described with reference to Fig. 2, and thus the detailed description thereof is omitted. In the example of Fig. 5, one ends of the capacitors C4 to C6 are connected to the right sides of the resistors R1 to R3 unlike the case of Fig. 2. The other ends of the capacitors C4 to C6 are connected to the switches SW4 to SW6.

The resistors R1 to R3 are provided as limiting resistors. As shown in Fig. 5, the resistors R1 to R3 are connected to the capacitors C4 to C6 respectively, the switches SW4 to SW6 are set to ON to connect the other ends of the capacitors C4 to C6 to GND, whereby a closed circuit is constructed by the resistors R1 to R3 and the capacitors C4 to C6. The closed circuit constructed by the resistors and the capacitors serves as an RC filter.

That is, when the switches SW4 to SW6 are opened, the resistors R1 to R3 function as limiting resistors. When the switches SW4 to SW6 are closed, the resistors R1 to R3 constitute RC filters together with the capacitors C4 to C6, respectively.

The RC filter is a filter which can remove a signal of a predetermined frequency. In this case, by properly setting the capacity of each of the capacitors C4 to C6, noise which is a signal of driving current from the LF driving circuit 102 and a signal having a predetermined frequency can be removed by these RC filters.

In the example of Fig. 5, for example when the antenna A is driven, CPU 101 supplies the LF driving circuit 102 with a digital signal to output driving current from the LF driving circuit 102, whereby the switch SW1, the switch SW5 and the switch SW6 are set to ON and also the switch SW2, the switch SW3 and the switch SW4 are set to OFF.

Accordingly, the driving current output from the LF driving circuit 102 successively flows through the resistor R1, the connector terminal 131-1, the harness 121-1, the connector terminal 132-1, the antenna A, the connector terminal 132-2, the harness 121-1, the connector terminal 131-2 and the switch SW1, and then is grounded. That is, the connector terminal 131-2 and GND are set to be connected to each other by setting the switch SW1 to ON, so that a closed circuit containing the LF driving circuit 102 and the antenna A is constructed. Accordingly, the antenna A is driven and outputs a signal of LF waves. Here, the switch SW4 is set to OFF, so that the closed circuit based on the resistor R1 and the capacitor C4 is not constructed, and the signal of the driving current output from the LF driving circuit 102 reaches the antenna A without being removed.

Both the switch SW2 and the switch SW3 are set to OFF, so that the closed circuit containing the LF driving circuit 102 and the antenna B is not constructed and the closed circuit containing the LF driving circuit 102 and the antenna C is not constructed unlike the case of the antenna A. Accordingly, the antenna B and the antenna C are not driven, and thus no signal of LF waves is output. Here, the switch SW5 and the switch SW6 are set to ON, so that a closed circuit based on the resistor R2 or R3 and the capacitor C5 or C6 is constructed as an RC filter and the signal of the driving current output from the LF driving circuit 102 is removed before it reaches the harness 121-3 or 121-5. Accordingly, it is possible to prevent occurrence of noise from the harnesses.

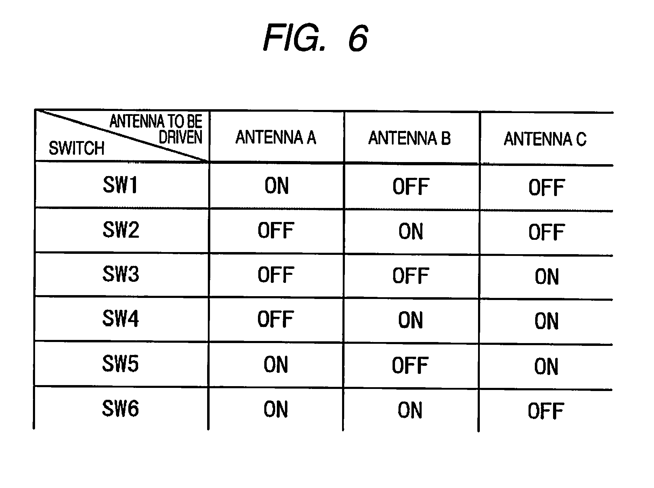

That is, the switches SW1 to SW6 may be set in accordance with the antenna to be driven as shown in Fig. 6. For example, when the antenna B is driven, CPU 101 supplies the LF driving circuit 102 with a digital signal to output driving current from the LF driving circuit 102, whereby the switch SW2, the switch SW4 and the switch SW6 are set to ON and the switch SW1, the switch SW3 and the switch SW5 are set to OFF. Furthermore, when the antenna C is driven, CPU 101 supplies the LF driving circuit 102 with a digital signal to output driving current from the LF driving circuit 102, whereby the switch SW3, the switch SW4 and the switch SW5 are set to ON and the switch SW1, the switch SW2 and the switch SW6 are set to OFF.

As described above, the switches SW1 to SW6 are properly set to ON or OFF so that only a desired antenna out of the antennas A to C is driven and the other antennas are not driven, and also noise occurring from the harnesses 121-1 to 121-6 can be removed.

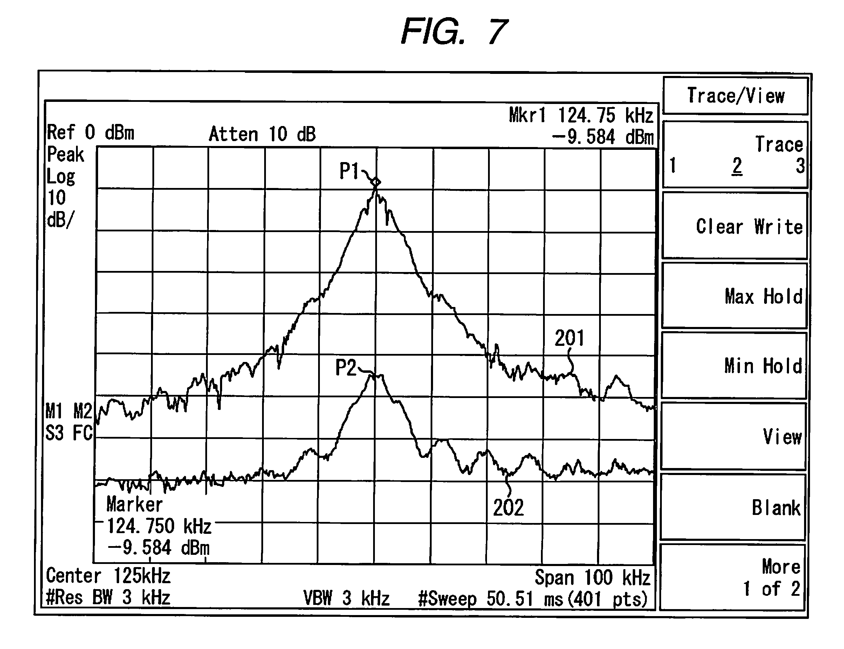

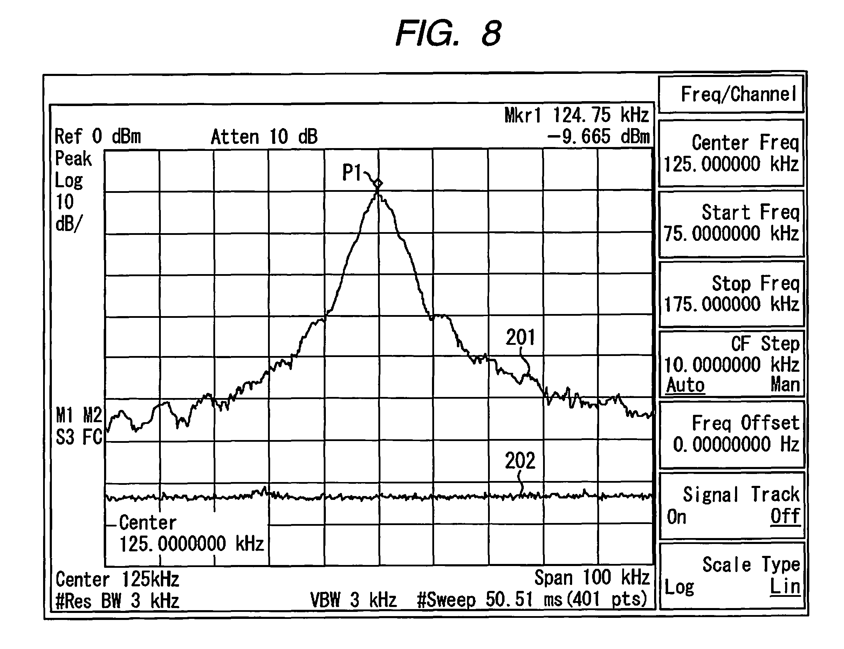

An effect of removing noise occurring from the harnesses 121-1 to 121-6 constructed as described above with reference to Fig. 5 will be described with reference to Figs. 7 and 8.

Fig. 7 shows an example of an oscillograph frame in which the intensity (dB) output from the antenna and the intensity (dB) of noise output from the harness when the signal is transmitted from the antenna by ECU 21 constructed as shown in Fig. 2 are measured. In Fig. 7, the abscissa axis represents the frequency, and the ordinate axis represents the intensity of signal or noise. For example when the antenna A is driven, the intensity of the signal output from the antenna A is represented by a line 201, and the intensity of noise output from the harnesses 121-3 to 121-6 is represented by a line 202.

As shown in Fig. 7, the peak P2 of the line 202 is formed at the same frequency as the peak P1 of the line 201. That is, the intensity of noises output from the harnesses 121-3 to 121-6 is largest at the frequency at which the intensity of the signal output from the antenna A is largest. As a result of the measurement, the intensity of the noise at the peak P2 was equal to about -55 (dBm).

Fig. 8 shows an example of an oscillograph frame in which the intensity (dB) of the signal output from the antenna and the intensity (dB) of the noise output from the harness are measured when the signal is transmitted from the antenna by ECU 21 constructed as shown in Fig. 5. In Fig. 8, the abscissa axis represents the frequency, and the ordinate axis represents the intensity of the signal or the noise as in the case of Fig. 7. For example when the antenna A is driven, the intensity of the signal output from the antenna A is represented by a line 201, and the intensity of the noise output from the harnesses 121-3 to 121-6 is represented by a line 202.

In the case of Fig. 8, no peak of the line 202 is formed at the same frequency as the peak P1 of the line 201. That is, the intensity of the noise output from the harnesses 121-3 to 121-6 is not increased at the frequency at which the intensity of the signal output from the antenna A is largest. As a result of the measurement, the intensity of the noise of the line 202 is equal to about - 83 (dBm) at any frequency.

That is, by constructing ECU as shown in Fig. 5, only one LF driving circuit 102 is provided to the antennas A to C, whereby the manufacturing cost and power consumption of the apparatus can be reduced, and also occurrence of noise can be suppressed to a low level.

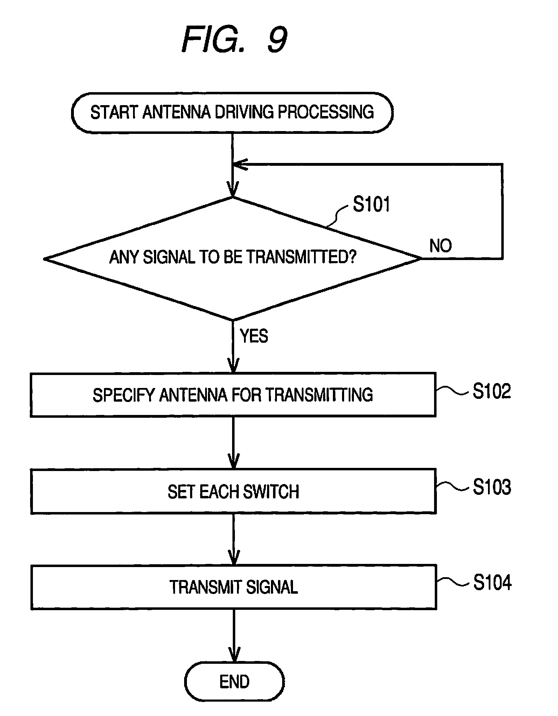

Next, antenna driving processing executed by CPU 101 of the in-vehicle mount machine 20 shown in Fig. 2 or 5 will be described with reference to the flowchart of Fig. 9.

In step S101, CPU 101 judges whether there is a signal to be transmitted through the antennas A to C to the portable machine 10 or the like. If a signal to be transmitted exists, the processing waits until it is judged whether a signal to be transmitted exists.

In step S102, CPU 101 specifies an antenna to which a signal should be transmitted. At this time, any one of the antennas A to C in Fig. 2 or 5 is specified as an antenna from which a signal should be transmitted (an antenna to be actuated). The processing of specifying the antenna is specified on the basis of the specification of PES 50, for example, and it is carried out by executing a program supplied from ROM to CPU 101 by CPU 101.

In step S103, CPU 101 outputs a control signal for setting the switch in connection with the antenna specified through the processing of step S102. At this time, in the case of the construction of Fig. 2, a control signal for setting each of the switches SW1 to SW3 as shown in Fig. 3 is output. In the case of the construction of Fig. 5, a control signal for setting each of the switches SW1 to SW6 as shown in Fig. 6 is output a control signal.

In step S104, CPU 101 supplies the LF driving circuit 102 with a digital signal to output driving current from the LF driving circuit 102, and a signal is transmitted from the antenna specified through the processing of the step S102.

As described above, the antenna is driven to transmit a signal.

In the foregoing description, the examples in which the present invention is applied to PES were described, and the present invention may be applied to other communication systems (for example, a tire air pressure monitoring system, an engine starting system, etc.).

In the example described above, the switches SW1, SW2 and SW3 are disposed at positions at which each antenna and the ground can be connected to each other, however, they may be disposed at the positions where each antenna and the LF driving circuit 102 are connected to each other.

Furthermore, in the foregoing example, each switch is provided every antenna, however, when the antennas A and B are driven at the same time, the antennas A and B may share one switch.

## Claims

1. A transmitting device for transmitting a signal from a desired antenna out of plural antennas, comprising:
antenna driving means for supplying driving current to a desired antenna;
plural switches connecting the antenna driving means to each of the plural antennas; and
control means for controlling the antenna driving means and outputting a control signal for controlling whether each of the switches is opened or closed, wherein the control means specifies an antenna to which the signal should be transmitted, and outputs a control signal for closing the specified switch out of the switches.

2. A transmitting device for transmitting a signal from a desired antenna out of plural antennas comprising:
antenna driving means for supplying driving current to a desired antenna;
plural first switches connecting the antenna driving means to plural antennas;
plural second switches connecting the antenna driving means to filters which are provided on signal lines of the plural antennas; and
control means for controlling the antenna driving means and outputting a control signal for controlling whether each of the first switches and the second switches is opened or closed, wherein the control means specifies an antenna to which the signal should be transmitted, outputs a control signal for closing the first switch corresponding to the specified antenna and outputs a control signal for closing second switches other than the second switch corresponding to the specified antenna, and each of the plural antennas is connected to the antenna driving means through a harness having a predetermined length.
